# EUROPEAN PATENT APPLICATION

(11) **EP 4 651 449 A1**
(43) Date of publication of application: **19.11.2025**
(21) Application number: 24176381.2
(22) Date of filing: 16.05.2024
(51) Int. Cl.: H04L 12/403

(54) **DRIVING BEHAVIOR MONITORING SYSTEM**

(71) Applicant: Harman Becker Automotive Systems GmbH, 76307 Karlsbad (DE)
(72) Inventor: HORICSÁNYI, László Gergely, 76307 Karlsbad (DE)
(74) Representative: Westphal, Mussgnug & Partner, Patentanwälte mbB

(57) **Abstract**

A system and method for monitoring a driving behavior of a vehicle comprises using a digital bus having a single-master multiple-slaves structure to transfer data and control signals in the vehicle; and controlling functions of the vehicle with an electronic control unit comprising a main bus node connected to the bus. They further comprise providing data regarding the movement of the vehicle in one or more directions; and evaluating with a sensor controller the data regarding the movement of the vehicle in one or more directions to recognize an untypical or unsafe behavior of the vehicle and sending to the electronic controller via a sub-ordinate node connected to the bus at least one of a message, an alert signal, or a risk factor dependent on the data regarding the movement of the vehicle.

## Description

### BACKGROUND

### 1. Technical Field

The disclosure relates to a system and method (generally referred to as a "system") for monitoring a driving behavior of a vehicle.

### 2. Related Art

Driving behavior monitoring systems are increasingly being used to monitor and assess the driving behavior of vehicles and their drivers. The data collected in this way is used for various purposes. One application of such vehicle usage data is to calculate or adjust a vehicle insurance premium dependent on the vehicle usage. Other applications include providing feedback to the drivers on how safely they are driving, making an emergency call in the event of an accident, and triggering automatic vehicle actions such as emergency braking or steering. Some of the applications require an instantaneous provision and processing of the data, which means that monitoring and assessment of the vehicle behavior need to be made in real time or at least close to it in order to keep latency low. However, real time systems are complex and costly, both of which are undesirable properties in vehicles. It is therefore desirable to have systems and methods for monitoring a driving behavior of a vehicle that operate in real time with low latency and are less complex and cost-effective.

### SUMMARY

A system for monitoring a driving behavior of a vehicle includes a digital bus having a single-master multiple-slaves structure and configured for bidirectional transfer of data and control signals; and an electronic controller configured to control functions of the vehicle, the electronic control unit comprising a main bus node connected to the bus. The system further includes a data evaluation processor comprising a sub-ordinate bus node connected to the bus, a movement sensor configured to provide data regarding the movement of the vehicle in one or more directions, and a sensor controller connected between the sub-ordinate bus node and the movement sensor, the sensor controller being configured to evaluate the data regarding the movement of the vehicle, to recognize an untypical or unsafe behavior of the vehicle and to send to the electronic controller at least one of a message, an alert signal, or a risk factor dependent on the data regarding the movement of the vehicle and an algorithm implemented in the sensor controller.

A method for monitoring a driving behavior of a vehicle includes using a digital bus having a single-master multiple-slaves structure to transfer data and control signals in the vehicle; and controlling functions of the vehicle with an electronic control unit comprising a main bus node connected to the bus. The method further includes providing data regarding the movement of the vehicle in one or more directions; and evaluating with a sensor controller the data regarding the movement of the vehicle in one or more directions to recognize an untypical or unsafe behavior of the vehicle and sending to the electronic controller via a sub-ordinate node connected to the bus at least one of a message, an alert signal, or a risk factor dependent on the data regarding the movement of the vehicle.

Other systems, methods, features and advantages will be, or will become, apparent to one with skill in the art upon examination of the following detailed description and appended figures. It is intended that all such additional systems, methods, features and advantages be included within this description, be within the scope of the invention, and be protected by the following claims.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.
FIG. 1 is a block diagram illustrating an example system for monitoring a driving behavior of a vehicle having a movement sensor, an evaluation processor and a bus interface included in an electronic assembly.
FIG. 2 is a block diagram illustrating an example system for monitoring a driving behavior of a vehicle having a movement sensor, an evaluation processor and a bus interface included in an integrated circuit.

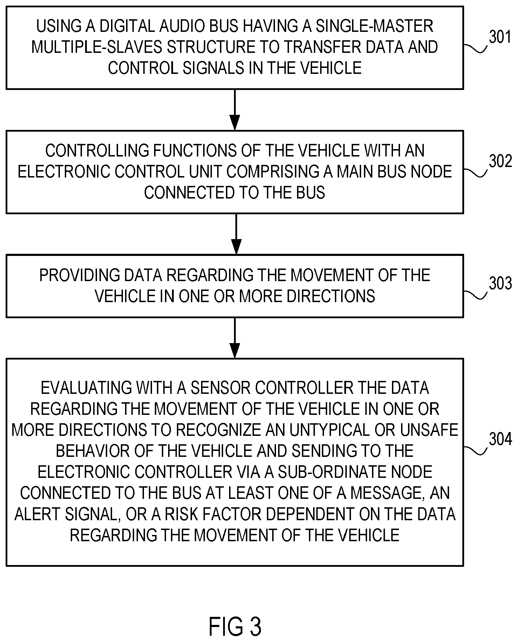

FIG. 3 is a flow chart illustrating method for monitoring a driving behavior of a vehicle.

### DETAILED DESCRIPTION

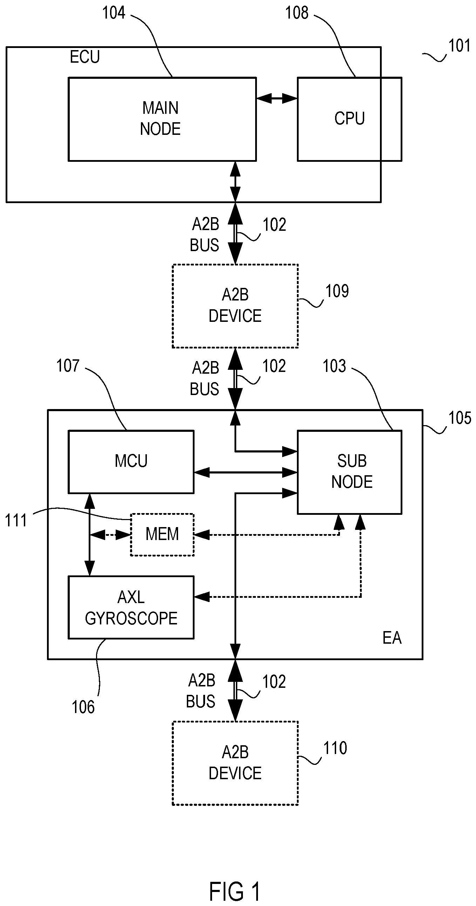

FIG. 1 shows a block diagram of an example system for monitoring a driving behavior of a vehicle. The system includes an electronic control unit (ECU) 101, for example, an audio or engine management ECU. An ECU in an automotive environment is a device which controls multiple systems of a vehicle in a single unit. Audio management ECUs have several key features that control the audio rendering in the vehicle cabin. They aim to deliver quality audio which is pleasing to the passengers in transit, and can also be leveraged to guide the driver during travel, such as driver-assistance systems (DAS) and advanced driver-assistance systems (ADAS). ADAS are technologies that assist drivers with the safe operation of a vehicle to increase car and road safety. ADAS are considered real-time systems since they react quickly to multiple inputs and prioritize the incoming information to prevent crashes. The systems use preemptive priority scheduling to organize which task needs to be done first. The incorrect or delayed assignment of these priorities due to a delayed provision of data is an incident which can cause a great deal of harm. An engine management ECU controls multiple systems of an internal combustion engine. Systems commonly controlled by an engine ECU include the fuel injection and ignition systems.

A bottleneck in terms of data transfer speed is the data link between the ECU and sensors since, in order to reduce the wiring complexity of the system, the sensors are commonly linked to the ECU via a bus, e.g., a data and control bus. In the example system shown in FIG. 1, an audio bus 102 is employed to connect one or more subordinate nodes in a daisy chain configuration to a main node 104. Only one subordinate (sub) node 103 is explicitly shown in FIG. 1. Many vehicles already have an audio bus on board to operate all multimedia activities in the vehicle. Multimedia activities in a vehicle require real-time data processing and transfer with low latency. The same applies to an automotive audio bus. A common audio bus is, for example, the A2B Audio Bus by Analog Devices, which allows for deterministic, low-latency, bi-directional transfer of audio and control signals to enable advanced audio and acoustic applications in an automotive environment, including, e.g., interfaces with an audio management ECU, eCall and telematics systems. Fundamentally, A2B is a daisy-chained, single twisted pair, bi-directional data bus in a master-slave configuration, for example, for supporting multiple channel audio with no jitter and extremely low, fixed latency (50 µs). Instead of an audio bus any other automotive bus meeting the requirements specified above may be used such as, for example, the automotive ethernet bus.

Master-slave is a model of asymmetric communication or control where one device or process (the master) controls one or more other devices or processes (the slaves) and serves as their communication hub. In other words: It is an architectural concept in information technology that describes how resources are controlled and distributed. Within this model, the master device or process has control over how and when subordinate devices and processes use resources. The main advantage is that complete access control puts the master at the center of system planning. This simplifies the process of resource sharing and also means that no unauthorized information exchange can take place. The main disadvantage of this model is that all communication involves the master. Since slaves are not able to communicate on their own with the master, the master must regularly poll the slaves to check for new data. This disadvantage is offset in that the subordinate device (slave) carries out some of the pre-processing independently of the master, thereby reducing the amount of data which has to be communicated to the master and ensuring that the polling will suffice for proper communication..

The main node 104 (master) is included in the ECU 101 and the subordinate node 103 (slave) is included in a data evaluation processor 105. The data evaluation processor 105 may be, for example, an electronic assembly (EA) with a multiplicity of discrete components including one or more silicon chips (integrated circuits) on a carrier plate. In any event the data evaluation processor 105 includes at least one sensor 106, a sensor controller 107, and the subordinate node 103 as a bus interface. Every network is comprised of a master node and up to 10 slave nodes. A master node, such as node 104, may include an A2B transceiver connected to a host processor, such as a central processing unit (CPU) 108 in the ECU 101, that can send audio, control data, and I2C data onto the A2B bus. Slave nodes, which vary in complexity from units with significant processing power to bus-powered nodes, may include A2B transceivers that interface with a broad range of devices such as digital signal processors (DSPs), MCUs, sensors, and so on. Master and slave transceiver devices support a variety of additional features such as support for time division multiplexed (TDM) and pulse-density modulation (PDM) signal inputs. Simplified derivatives of the A2B transceivers exist with a variety of levels of functionality, such as an endpoint slave (no TDM support), a simplified master (reduced cable length support, fewer slaves supported), and a simplified endpoint slave (reduced cable length support, fewer PDM inputs).

The at least one sensor 106 may include at least one of an accelerometer, an AXL sensor or a gyroscope. An accelerometer is a device that measures the proper acceleration of an object which is per definition the acceleration (the rate of change of velocity) of the object relative to an observer who is in free fall (that is, relative to an inertial frame of reference). Proper acceleration is different from coordinate acceleration, which is acceleration with respect to a given coordinate system which may or may not be accelerating. Triple-axis (AXL) accelerometers are sensors that measure accelerations in three perpendicular directions. Gyroscopes are devices used for measuring or maintaining orientation and angular velocity. A gyroscope may be a spinning wheel or disc in which the axis of rotation (spin axis) is free to assume any orientation by itself. When rotating, the orientation of this axis is unaffected by tilting or rotation of the mounting, according to the conservation of angular momentum. Gyroscopes based on other operating principles also exist, such as the microchip-packaged MEMS gyroscopes found in electronic devices, solid-state ring lasers, and fiber optic gyroscopes. The at least one sensor 106 shown in FIG. 1 is, for example, a combination of an AXL sensor and a gyroscope.

The sensor controller 107 may be implemented with a microcontroller unit (MCU), e.g., a low footprint MCU, and dedicated software. The software may enable the MCU to provide any type of data evaluation ranging from simple statistical analysis to more sophisticated machine learning and complex artificial intelligence. The data evaluation in the sensor controller 107 may include pre-processing for black boxes, crash detection, fleet tracking, driver's behavior tracking, car alarms, anti-theft systems, tilt detection, navigation and some more. The more data are pre-processed in the sensor controller 107, the less data need to be transferred via the bus and the less data have to be processed in the ECU 101, which increases the overall system processing speed. Particularly, the combination of a faster bus, the audio bus, and less data to be transferred due to pre-processing boost the system speed. To reduce the wiring complexity, the data evaluation processor 105 is supplied with power via the two-wire A2B bus, which simultaneously transfers the data and control signals.

Optionally, one or more further A2B devices such as A2B devices 109 and 110 may be added or, if already present, co-used. The further A2B devices 109 and 110 may include further sensors which are connected to at least one of the ECU 101 and the data evaluation processor 105 via the audio bus 102. In the example shown, device 110 is coupled with the ECU 101 through the data evaluation processor 105 and the device 109. The data evaluation processor 105 is coupled through the device 109 to the ECU 101. The sensors in devices 109 and 110 may communicate via the audio bus 102 directly with the data evaluation processor 105 or via the ECU 101, which may provide some additional processing. Further, additional data retrieved from other sources may be sent to the data evaluation processor 105 by the ECU 101. The data sent to the data evaluation processor 105 via the audio bus 102 may not be time critical, while the data by the internal sensor(s) of the data evaluation processor 105 may be. Further, the movement sensor 106 of the data evaluation processor 105may sent data directly to the to the CPU 108 of the ECU 101 via the subordinate node 103, the audio bus 102, and the main node 104 upon request of the CPU 108. The data evaluation processor 105 may optionally include a memory (MEM) 111 to store data from at least one of the movement sensor 106, additional device(s) 109, 110, and the ECU 101. The stored data may be provided not only to the sensor controller 107 but also the ECU 101 upon request.

In the system shown in FIG. 1, "dangerous" events may generate alerts, which will be sent to the ECU 101. These messages may include the type of event detected (e.g. sudden braking or lane change). By processing the movement sensor data in a separate device, which is the data evaluation processor, there is no need to do such processing in the ECU. It is also possible to store (record, log) the type and frequency of dangerous events in the data evaluation processor. In this way profiling is done on the separate device, and the ECU needs only to access the result of this profiling process. The profiling result may either be a score, or the log of dangerous events. If desired, the raw movement sensor data may be streamed through the audio bus, along with profiling related data if desired. Except for the separate device, the data evaluation processor, all other components may already exist in the vehicle so that the additionally required circuitry is very low, yet the technical performance is excellent. There is no need for an additional wiring that allows high-speed transfer of data.

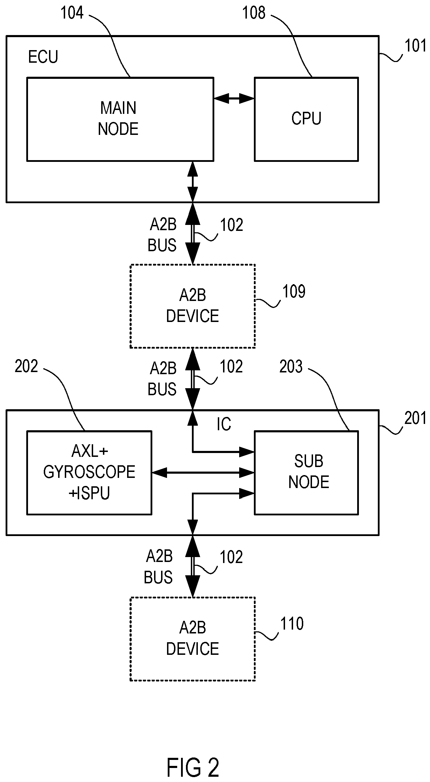

The system shown in FIG. 2 is identical with the one shown in FIG. 1 except for the data evaluation processor 105 which is replaced by a data evaluation processor 201. The data evaluation processor 201 is an integrated circuit (IC) with a sensor 202 similar to the movement sensor 106, but with an inbuilt integrated sensor processing unit (ISPU) 202 and an inbuilt subordinate node 203. The sensor chip with integrated sensor processing unit (ISPU) , i.e., the data evaluation processor 201, can run an evaluation algorithm without an additional MCU. "Dangerous" events can generate alerts, which will be sent to the ECU. These messages will include the type of event detected (e.g. sudden braking or lane change). The ECU may access the sensor through the I2C interface of the A2B bus. By processing the accelerometer and gyroscope data on the product, there is no need to run such processing on the ECU. OEM's already need accelerometers in every vehicle; providing them with one that has built-in driver profiling capabilities would make it much easier for them to implement this technology.

An example method for monitoring a driving behavior of a vehicle includes using a digital audio bus having a single-master multiple-slaves structure to transfer data and control signals in the vehicle (procedure 301); and controlling functions of the vehicle with an electronic control unit comprising a main bus node connected to the bus (procedure 302). The method further includes providing data regarding the movement of the vehicle in one or more directions (procedure 303); and evaluating with a sensor controller the data regarding the movement of the vehicle in one or more directions to recognize an untypical or unsafe behavior of the vehicle and sending to the electronic controller via a sub-ordinate node connected to the bus at least one of a message, an alert signal, or a risk factor dependent on the data regarding the movement of the vehicle (procedure 304).

The method may optionally include that the data regarding the movement of the vehicle in one or more directions obtained by at least one of an acceleration sensor, a three-dimensional acceleration sensor and a gyroscope are provided directly, i.e., hardwired without employing the audio bus or any other bus, to the sensor controller. Additional data regarding the movement of the vehicle in one or more directions may be obtained via the audio bus from at least one additional sensor that may already be connected to the sensor controller via the audio bus. The method may optionally further include providing by the electronic controller to the driving evaluation arrangement accompanying data in connection with the movement of the vehicle. Evaluating the data regarding the movement of the vehicle in one or more directions may include at least one of statistical evaluation, machine learning and artificial intelligence. The method may optionally further include storing data from at least one of the movement sensors, additional sensors and electronic controller in a memory in the data evaluation processor.

The driver-specific data obtained by the method outlined above may be useful for insurance companies and car sharing fleets. Such fleets ask their users to register on an app before driving, so the data gathered could be used to assign a risk factor to individual users. This data could be updated over time. For example, people with a fresh driver's license might get a higher risk-score in the beginning, but this score can lower over time as they gain more experience. Another use case would be the detection of "road rage" incidents. Detecting when a car is stuck in traffic is relatively simple with an accelerometer. If drivers begin to accelerate and brake more aggressively when stuck in traffic, it means they are becoming more agitated, and the risk of an accident increases. The ECU may further provide to the data evaluation processor accompanying data in connection with the movement of the vehicle such as data about the accelerator pedal position, windshield wiper activity, and the gear engaged. Additionally or alternatively, other types of data in connection with the movement of the vehicle can be used as well to enhance accuracy. For example, the time of day may be useful to improve the algorithm because traffic tends to be dense in the morning, and sparse late at night. Similarly, the ambient temperature may be considered in assessment procedure.

The method described above may be implemented by software and/or firmware stored on or in a computer-readable medium, machine-readable medium, propagated-signal medium, and/or signal-bearing medium. The media may comprise any device that contains, stores, communicates, propagates, or transports executable instructions for use by or in connection with an instruction executable system, apparatus, or device. The machine-readable medium may selectively be, but is not limited to, an electronic, magnetic, optical, electromagnetic, or infrared signal or a semiconductor system, apparatus, device, or propagation medium. A non-exhaustive list of examples of a machine-readable medium includes: a magnetic or optical disk, a volatile memory such as a Random Access Memory "RAM," a Read-Only Memory "ROM," an Erasable Programmable Read-Only Memory (i.e., EPROM) or Flash memory, or an optical fiber. A machine-readable medium may also include a tangible medium upon which executable instructions are printed, as the logic may be electronically stored as an image or in another format (e.g., through an optical scan), then compiled, and/or interpreted or otherwise processed. The processed medium may then be stored in a computer and/or machine memory.

The method may be encoded as instructions for execution by a processor. Alternatively or additionally, any type of logic may be utilized and may be implemented as analog or digital logic using hardware, such as one or more integrated circuits (including amplifiers, adders, delays, and filters), or one or more processors executing amplification, adding, delaying, and filtering instructions; or in software in an application programming interface (API) or in a Dynamic Link Library (DLL), functions available in a shared memory or defined as local or remote procedure calls; or as a combination of hardware and software.

The systems may include additional or different logic and may be implemented in many different ways. A controller may be implemented as a microprocessor, microcontroller, application specific integrated circuit (ASIC), discrete logic, or a combination of other types of circuits or logic. Similarly, memories may be DRAM, SRAM, Flash, or other types of memory. Parameters (e.g., conditions and thresholds) and other data structures may be separately stored and managed, may be incorporated into a single memory or database, or may be logically and physically organized in many different ways. Programs and instruction sets may be parts of a single program, separate programs, or distributed across several memories and processors.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The described methods and associated actions may also be performed in various orders in addition to the order described in this application, in parallel, and/or simultaneously. The described systems are exemplary in nature, and may include additional elements and/or omit elements.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their obj ects.

While various embodiments of the invention have been described, it will be apparent to those of ordinary skilled in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof.

## Claims

1. A system for monitoring a driving behavior of a vehicle, the system comprising:
a digital bus having a single-master multiple-slaves structure and configured for bidirectional transfer of data and control signals;
an electronic controller configured to control functions of the vehicle, the electronic control unit comprising a main bus node connected to the bus; and
a data evaluation processor comprising a sub-ordinate bus node connected to the bus, a movement sensor configured to provide data regarding the movement of the vehicle in one or more directions, and a sensor controller connected between the sub-ordinate bus node and the movement sensor, the sensor controller being configured to evaluate the data regarding the movement of the vehicle, to recognize an untypical or unsafe behavior of the vehicle and to send to the electronic controller at least one of a message, an alert signal, or a risk factor dependent on the data regarding the movement of the vehicle and an algorithm implemented in the sensor controller.

2. The system of claim 1, wherein the movement sensor comprises at least one of an acceleration sensor, a three-dimensional acceleration sensor and a gyroscope.

3. The system of claim 1 or 2, wherein the sub-ordinate bus node, the movement sensor and the sensor controller are included in a mutual integrated semiconductor chip.

4. The system of any of the preceding claims, further comprising at least one additional sensor connected to the bus and configured to provide to the data evaluation processor further data regarding the movement of the vehicle.

5. The system of any of the preceding claims, wherein the electronic controller is further configured to provide to the data evaluation processor accompanying data in connection with the movement of the vehicle.

6. The system of any of the preceding claims, wherein the algorithm implemented in the sensor controller includes at least one of statistical evaluation, machine learning and artificial intelligence.

7. The system of any of the preceding claims, wherein the data evaluation processor is supplied with power via the bus.

8. The system of any of the preceding claims, wherein the bus is a two wire bus.

9. The system of any of the preceding claims, wherein the data evaluation processor further comprises a memory to store data from at least one of the movement sensor, additional sensor and the electronic controller.

10. A method for monitoring a driving behavior of a vehicle, the method comprising:
using a digital bus having a single-master multiple-slaves structure to transfer data and control signals in the vehicle;
controlling functions of the vehicle with an electronic control unit comprising a main bus node connected to the bus;
providing data regarding the movement of the vehicle in one or more directions; and
evaluating with a sensor controller the data regarding the movement of the vehicle in one or more directions to recognize an untypical or unsafe behavior of the vehicle and sending to the electronic controller via a sub-ordinate node connected to the bus at least one of a message, an alert signal, or a risk factor dependent on the data regarding the movement of the vehicle.

11. The method of claim 10, wherein the data regarding the movement of the vehicle in one or more directions are provided directly to the sensor controller using at least one of an acceleration sensor, a three-dimensional acceleration sensor and a gyroscope.

12. The method of claim 10 or 11, wherein additional data regarding the movement of the vehicle in one or more directions are provided via the bus using at least one additional sensor connected to the sensor controller via the bus.

13. The method of any of claims 10-12, further comprising providing by the electronic controller to the driving evaluation arrangement accompanying data in connection with the movement of the vehicle.

14. The method of any of claims 10-13, wherein evaluating the data regarding the movement of the vehicle in one or more directions includes at least one of statistical evaluation, machine learning and artificial intelligence.

15. The method of any of claims 10-14, further comprising storing data from at least one of the movement sensors, additional sensors and electronic controller in a memory in the data evaluation processor.

## Amended claims

### Amended claims in accordance with Rule 137(2) EPC.

1. A system for monitoring a driving behavior of a vehicle, the system comprising:
a digital bus (102) having a single-master multiple-slaves structure and configured for bidirectional transfer of data and control signals;
an electronic controller (101) configured to control functions of the vehicle, the electronic controller (101) comprising a main bus node (104) connected to the bus (102); and
a data evaluation processor (105, 201) comprising a sub-ordinate bus node (103, 203) connected to the bus (102), a movement sensor (106, 202) configured to provide data regarding the movement of the vehicle in one or more directions, and a sensor controller (107, 202) connected between the sub-ordinate bus node (103) and the movement sensor (106, 202) or being integrated in the movement sensor (202) connected to the sub-ordinate bus node (201), **characterized in that**
the sensor controller (106, 202) being configured to evaluate and pre-process the data regarding the movement of the vehicle to recognize an untypical or unsafe behavior of the vehicle and to send to the electronic controller (101) a risk factor dependent on the data regarding the movement of the vehicle and an algorithm implemented in the sensor controller (107, 202).

2. The system of claim 1, wherein the movement sensor (106, 202) comprises at least one of an acceleration sensor, a three-dimensional acceleration sensor and a gyroscope.

3. The system of claim 1 or 2, wherein the sub-ordinate bus node (103, 203), the movement sensor (106, 202) and the sensor controller (107, 202) are included in a mutual integrated semiconductor chip.

4. The system of any of the preceding claims, further comprising at least one additional sensor (109, 110) connected to the bus (102) and configured to provide to the data evaluation processor (105, 201) further data regarding the movement of the vehicle.

5. The system of any of the preceding claims, wherein the electronic controller (101) is further configured to provide to the data evaluation processor (105, 201) accompanying data in connection with the movement of the vehicle.

6. The system of any of the preceding claims, wherein the algorithm implemented in the sensor controller (107, 202) includes at least one of statistical evaluation, machine learning and artificial intelligence.

7. The system of any of the preceding claims, wherein the data evaluation processor (105, 201) is supplied with power via the bus (102).

8. The system of any of the preceding claims, wherein the bus (102) is a two wire bus.

9. The system of any of the preceding claims, wherein the data evaluation processor (105, 201) further comprises a memory (111) to store data from at least one of the movement sensor (106), an additional sensor (109, 110) and the electronic controller (101).

10. A method for monitoring a driving behavior of a vehicle, the method comprising:
using a digital bus (102) having a single-master multiple-slaves structure to transfer data and control signals in the vehicle;
controlling functions of the vehicle with an electronic controller (101) comprising a main bus node (104) connected to the bus (102); and
providing data regarding the movement of the vehicle in one or more directions using a movement sensor (106, 202); **characterized by**
evaluating and pre-processing with a sensor controller (107, 202) the data regarding the movement of the vehicle in one or more directions to recognize an untypical or unsafe behavior of the vehicle and sending to the electronic controller (101) via a sub-ordinate node (103, 203) connected to the bus (102) a risk factor dependent on the data regarding the movement of the vehicle.

11. The method of claim 10, wherein the data regarding the movement of the vehicle in one or more directions are provided directly to the sensor controller (107, 202) using at least one of an acceleration sensor, a three-dimensional acceleration sensor and a gyroscope.

12. The method of claim 10 or 11, wherein additional data regarding the movement of the vehicle in one or more directions are provided via the bus (102) using at least one additional sensor (109, 110) connected to the sensor controller (107, 202) via the bus (102).

13. The method of any of claims 10-12, further comprising providing by the electronic controller (101) to the data evaluation processor (105, 201) accompanying data in connection with the movement of the vehicle.

14. The method of any of claims 10-13, wherein evaluating the data regarding the movement of the vehicle in one or more directions includes at least one of statistical evaluation, machine learning and artificial intelligence.

15. The method of any of claims 10-14, further comprising storing data from at least one of the movement sensor (106), additional sensors (109, 110) and electronic controller (101) in a memory (111) in the data evaluation processor (105, 201).
